(19) Europäisches Patentamt
European Patent Office
Office européen des brevets

(11) **EP 3 821 138 B1**

(12) **EUROPÄISCHE PATENTSCHRIFT**

(45) Veröffentlichungstag und Bekanntmachung des Hinweises auf die Patenterteilung:
**30.03.2022   Patentblatt 2022/13**

(21) Anmeldenummer: **19742000.3**

(22) Anmeldetag: **12.07.2019**

(51) Internationale Patentklassifikation (IPC):
**F15B 19/00** *(2006.01)*     **F15B 21/0423** *(2019.01)*
**F28F 27/00** *(2006.01)*     **B30B 15/16** *(2006.01)*
**B30B 15/34** *(2006.01)*

(52) Gemeinsame Patentklassifikation (CPC):
**F15B 19/005; B30B 15/16; B30B 15/34;**
**F15B 21/0423; F28F 27/00;** F15B 2211/611;
F15B 2211/62; F15B 2211/6306; F15B 2211/632;
F15B 2211/633; F15B 2211/6343; F15B 2211/863

(86) Internationale Anmeldenummer:
**PCT/EP2019/068802**

(87) Internationale Veröffentlichungsnummer:
**WO 2020/011971 (16.01.2020 Gazette 2020/03)**

(54) **VERFAHREN ZUM CONDITION MONITORING EINES HYDRAULIKSYSTEMS EINER METALLUMFORMUNGSANLAGE SOWIE CONDITION-MONITORING-VORRICHTUNG**

METHOD FOR MONITORING THE CONDITION OF A HYDRAULIC SYSTEM OF A METAL FORMING PLANT AND CONDITION-MONITORING DEVICE

PROCÉDÉ DE SURVEILLANCE D'ÉTAT D'UN SYSTÈME HYDRAULIQUE D'UNE INSTALLATION DE FAÇONNAGE DE MÉTAL, AINSI QUE DISPOSITIF DE SURVEILLANCE D'ÉTAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2018   DE 102018211714**

(43) Veröffentlichungstag der Anmeldung:
**19.05.2021   Patentblatt 2021/20**

(73) Patentinhaber: **SMS Group GmbH**
**40237 Düsseldorf (DE)**

(72) Erfinder: **STAMMBERGER, Reiner**
**57223 Kreuztal (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
**WO-A1-2010/136254     WO-A1-2016/202316**
**US-A- 2 358 353**

**Beschreibung**

Die vorliegende Erfindung betrifft ein Verfahren zum Condition Monitoring eines Hydrauliksystems einer Metallumformungsanlage nach Gattung des unabhängigen Anspruchs 1. Ferner betrifft die Erfindung eine Condition-Monitoring-Vorrichtung nach Gattung des unabhängigen Anspruchs 15.

Stand der Technik

Heutige Metallumformungsanlagen, wie beispielsweise Walzwerksanlagen, Pressanlagen oder Stranggussanlagen, weisen ein ein Arbeitsfluid bereitstellendes Hydrauliksystem und mit dem Arbeitsfluid betreibbare Arbeitskomponenten zur Metallumformung auf. Zur Einhaltung stabiler Betriebstemperaturen sind in dem Hydrauliksystem ein oder mehrere Wärmetauscher vorgesehen, die einen Teil der Wärmeenergie des ihre Primärseite durchströmenden Arbeitsfluids an ein auf der Sekundärseite der Wärmetauscher bereitgestelltes Kühlfluid abgeben.

Ein derartige Metallumformungsanlage und insbesondere ihr Hydrauliksystem muss regelmäßig vorbeugend, also zeitlich deutlich vor dem erwartungsgemäßen Ausfall einer Komponente des Hydrauliksystems, gewartet werden, um mit hohen Kosten verbundene, unerwartete Ausfälle der Metallumformungsanlage zu verhindern. Zur Verringerung der Wartungskosten einer Metallumformungsanlage ist es aber wünschenswert, Wartungsmaßnahmen nur bei Erreichen oder Überschreiten eines vorgegebenen realen Verschleißzustands der Metallumformungsanlage bzw. des Hydrauliksystems vorzunehmen oder einzuplanen.

Zur optimierten Planung von Wartungsmaßnahmen an technischen Anlagen ist allgemein das Konzept des Condition Monitoring bekannt. Der Begriff Condition Monitoring bezeichnet eine Zustandsüberwachung einer technischen Anlage mit den Schritten einer Erfassung des Zustands der Anlage und eines Abgleichs des erfassten Zustands mit Referenzwerten.

Im Bereich der Hydrauliksysteme von Metallverarbeitungsanlagen mangelt es aber an praktisch und wirtschaftlich umsetzbaren Konzepten für das Condition Monitoring.

WO 2010/136254 A1 offenbart ein bekanntes Verfahren zum Condition Monitoring eines Hydrauliksystems.

Offenbarung der Erfindung

Der vorliegenden Erfindung liegt daher die Aufgabe zugrunde, ein Verfahren zum Condition Monitoring eines Hydrauliksystems und eine entsprechende Condition-Monitoring-Vorrichtung bereitzustellen, die eine technisch einfache und wirtschaftlich umsetzbare Planung von Wartungsarbeiten an Metallumformungsanlagen mit Hydrauliksystemen ermöglichen.

Die Aufgabe der vorliegenden Erfindung wird durch ein unten vorgestelltes Verfahren mit den Merkmalen des Anspruchs 1 gelöst. Vorteilhafte Ausführungsformen des Verfahrens ergeben sich aus den Merkmalen der abhängigen Ansprüche 2 bis 14. Die Aufgabe der vorliegenden Erfindung wird auch durch eine Condition-Monitoring-Vorrichtung mit den Merkmalen des Anspruchs 15 gelöst.

Der Erfindung liegt als Ausgangspunkt die Erkenntnis des Erfinders zugrunde, dass die Wartungsdringlichkeit des Hydrauliksystems einer Metallumformungsanlage und/oder der Alterungszustand des Hydrauliksystems bestimmt bzw. hergeleitet werden können, indem die aktuelle Kühlleistung des Wärmetauschers des Hydrauliksystems und die aktuelle Förderleistung der Pumpe des Hydrauliksystems ermittelt und miteinander verknüpft werden.

Das Verfahren ist auf ein Hydrauliksystem einer Metallumformungsanlage gerichtet, wobei das Hydrauliksystem mit mindestens einer Pumpe, die durch mindestens einen Antriebsmotor antreibbar ist, und mit mindestens einem Wärmetauscher gekoppelt oder versehen ist. Die in den Ansprüchen im Singular verwendeten Begriffe der Pumpe und des Wärmetauschers umfassen ebenso eine jeweilige Mehrzahl dieser Komponenten. Ist eine jeweilige Mehrzahl eines Typs dieser Komponenten in dem Hydrauliksystem bereitgestellt, so wird das Verfahren auf die Gesamtheit dieser Komponenten angewendet. Dementsprechend sieht das Verfahren vor, dass bevorzugt die aktuelle Gesamtkühlleistung sämtlicher Wärmetauscher und die aktuelle Gesamtförderleistung sämtlicher das Arbeitsfluid fördernden Pumpen für die Ermittlung der aktuellen Wartungsdringlichkeit und/oder des aktuellen Alterungszustands des Hydrauliksystems berücksichtigt werden.

Das Verfahren ist auf ein Hydrauliksystem gerichtet, das mit einem Wärmetauscher (im Sinne von einem oder mehrere Wärmetauscher) versehen oder gekoppelt ist, der eine Primärseite und eine Sekundärseite aufweist, wobei zumindest auf der Primärseite des Wärmetauschers eine Einlassöffnung und eine Auslassöffnung vorgesehen sind. Ein in dem Hydrauliksystem verwendetes Arbeitsfluid, insbesondere Öl, wird der primärseitigen Einlassöffnung des Wärmetauschers zugeführt, durchströmt einen Primärkreislaufabschnitt des Wärmetauschers und wird an der primärseitigen Auslassöffnung des Wärmetauschers abgeführt. Das Arbeitsfluid wird stromaufwärts und/oder stromabwärts des Wärmetauschers angeordneten Arbeitskomponenten, beispielsweise Walzgerüste oder Presswerkzeuge, der Metallumformungsanlage zugeführt. Das Arbeitsfluid wird durch die Pumpe des Hydrauliksystems in einem offenen oder geschlossenen Kreislauf bewegt. Auf der Sekundärseite des Wärmetauschers wird ein Kühlfluid, beispielsweise Wasser und/oder Luft, zur Aufnahme eines Teils der Wärmeenergie des den Primärkreislaufabschnitt des Wärmetauschers durchströmenden Arbeitsfluids bereitgestellt. Das Kühlfluid kann beispielsweise als Kühlwasser an einer sekundärseitigen Einlassöffnung des Wärmetauschers zugeführt und nach Durchströmen des Sekundärkreislaufabschnitt des Wärmetauschers an einer sekundärseitigen Auslassöffnung des Wärmetauschers abgeführt werden. Das Kühlfluid kann alternativ oder optional auch als Luft den Primärkreislaufabschnitt des Wärmetauschers umströmen. Der Wärmetauscher ist zur Übertragung einer Leistung von dem ihn durchströmenden Arbeitsfluid auf das Kühlfluid ausgebildet. Eine aktuell von der Primärseite an die Sekundärseite des Wärmetauschers pro Zeiteinheit übertragene Wärmeenergie wird als die Kühlleistung oder Wärmeabführleistung des Wärmetauschers bezeichnet. Ein Weg zum aufwandsarmen Ermitteln der aktuellen Kühlleistung des Wärmetauschers des Hydrauliksystems ist weiter unten beschrieben.

Zudem ist das Verfahren auf ein Hydrauliksystem gerichtet, in dem das Arbeitsfluid durch eine antreibbare Pumpe (im Sinne von eine oder mehrere Pumpen) des Hydrauliksystems mit einer aktuellen Förderleistung befördert bzw. gepumpt und somit den Arbeitskomponenten des Hydrauliksystems mit einem vorgegebenen Volumenstrom und/oder innerhalb eines vorgegebenen Druckbereichs bereitgestellt wird. Die aktuelle Förderleistung der Pumpe kann ermittelt werden, indem die aktuelle Förderleistung direkt oder indirekt gemessen wird. Die Pumpe wird durch einen Antriebsmotor (im Sinne von einem oder mehreren Antriebsmotoren) des Hydrauliksystems angetrieben. Der Antriebsmotor kann ein elektrischer Motor, insbesondere eine Drehstrom-Asynchronmaschine, sein. Für das vorgestellte Verfahren kann die aktuelle Förderleistung der Pumpe beispielsweise durch Ermitteln bzw. Messen der aktuellen elektrischen Leistungsaufnahme des elektrischen Antriebsmotors der Pumpe mit einem bekannten Verfahren ermittelt werden.

Gemäß dem vorgestellten Verfahren werden, durch eine Condition-Monitoring-Vorrichtung oder auf Veranlassung der Condition-Monitoring-Vorrichtung, die aktuelle Kühlleistung des Wärmetauschers des Hydrauliksystems und die aktuelle Förderleistung der Pumpe des Hydrauliksystems ermittelt und für die durch das Verfahren vorzunehmende Ermittlung bzw. Beurteilung einer aktuellen Wartungsdringlichkeit und/oder eines aktuellen Alterungszustands des Hydrauliksystems verwendet. Diese Beurteilung kann vorgenommen werden, indem die Condition-Monitoring-Vorrichtung die ermittelte Kühlleistung und die ermittelte Förderleistung mit für die ermittelten Leistungstypen individuell vorgegebenen Referenzwerten vergleicht oder diesen Vergleich veranlasst. Diese Beurteilung kann auch vorgenommen werden, indem die Condition-Monitoring-Vorrichtung die ermittelte Kühlleistung und die ermittelte Förderleistung mit für die ermittelten Leistungstypen individuell vorgegebenen Gewichtungen zu einer Gesamtinformation kombiniert und diese Gesamtinformation mit einem oder mehreren vorgegebenen Gesamtreferenzwerten vergleicht oder diesen Vergleich veranlasst. Die vorgegebenen Referenzwerte können Messwerte des dem Condition-Monitoring-Verfahren unterzogenen Hydrauliksystems unmittelbar nach einer Erstinbetriebnahme oder unmittelbar nach einer erfolgten Wartung des Hydrauliksystems sein. Die aktuelle Wartungsdringlichkeit und/oder der aktuelle Wartungszustands des Hydrauliksystems kann beispielsweise als binäre Information im Sinne von "Wartung erforderlich" bzw. "Wartung nicht erforderlich" ermittelt werden, wird aber bevorzugt als eine numerische Information mit mehr als zwei Zuständen (beispielsweise 0 bis 100% Wartungsdringlichkeit, mit einer 1%-Schrittweite) ermittelt.

Das vorgestellte Verfahren ermöglicht es, dass Wartungsmaßnahmen an dem Hydrauliksystem einer Metallumformungsanlage nicht gemäß einem vorsichtig ausgelegten festen Zeitplan sondern nur dann vorgenommen werden, wenn die Wartungsmaßnahmen tatsächlich erforderlich sind oder in naher Zukunft erforderlich sein werden. Das vorgestellte Verfahren ermöglicht eine technisch einfache und wirtschaftlich umsetzbare Planung von Wartungsarbeiten an Metallumformungsanlagen mit Hydrauliksystemen.

In einer Weiterbildung des vorgestellten Verfahrens ist vorgesehen, dass die Condition-Monitoring-Vorrichtung ferner eine aktuelle Umgebungstemperatur wärmeabstrahlender Flächen des Hydrauliksystems ermittelt und die aktuelle Wartungsdringlichkeit und/oder den aktuellen Alterungszustand des Hydrauliksystems auch unter Berücksichtigung der ermittelten Umgebungstemperatur bestimmt. Die aktuelle Kühlleistungsfähigkeit des Wärmetauschers des Hydrauliksystems hängt von der aktuellen Umgebungstemperatur der wärmeabstrahlenden Flächen des Hydrauliksystems ab. Durch das Ermitteln der aktuellen Umgebungstemperatur der wärmeabstrahlenden Flächen des Hydrauliksystems kann die Condition-Monitoring-Vorrichtung die ermittelte aktuelle Kühlleistung des Wärmetauschers exakter bewerten und aus dieser exakteren Bewertung den aktuellen Alterungszustand bzw. die aktuelle Wartungsdringlichkeit des Hydrauliksystems präziser ableiten.

In einer Fortbildung der vorgenannten Weiterbildung des vorgestellten Verfahrens ist vorgesehen, dass die Condition-Monitoring-Vorrichtung als die aktuelle Umgebungstemperatur der wärmeabstrahlenden Flächen des Hydrauliksystems eine Außentemperatur am Standort des Hydrauliksystems und/oder der Metallumformungsanlage ermittelt. Die Außentemperatur wird bevorzugt durch Abruf von auf den Standort des Hydrauliksystems bzw. der Metallumformungsanlage bezogenen Wetterdaten eines Wetterdienst-Servers ermittelt. Die aktuelle Umgebungstemperatur der wärmeabstrahlenden Flächen des Hydrauliksystems hängt stark von der am Standort des Hydrauliksystems bzw. der Metallumformungsanlage aktuell vorherrschenden Außentemperatur ab. Aus der aktuellen Außentemperatur kann somit mit geringem Implementierungsaufwand eine Information über die aktuelle Umgebungstemperatur der wärmeabstrahlenden Flächen des Hydrauliksystems gewonnen werden. Zusätzlich zu oder anstelle der Außentemperatur kann die Condition-Monitoring-Vorrichtung bei Durchführung des vorgestellten Verfahrens auch weitere Informationen über am Standort der Metallumformungsanlage vorherrschende klimatische Bedingungen für das Ermitteln der Wartungsdringlichkeit bzw. des Alterungszustands des Hydrauliksystems berücksichtigen.

In einer Weiterbildung des vorgestellten Verfahrens ist vorgesehen, dass die Condition-Monitoring-Vorrichtung auf Grundlage der ermittelten Kühlleistung des Wärmetauschers und der ermittelten Förderleistung der Pumpe eine Information über einen Wirkungsgrad des Hydrauliksystems ermittelt. Bevorzugt wird für die Ermittlung des Wirkungsgrades des Hydrauliksystems auch die Umgebungstemperatur der wärmeabstrahlenden Flächen des Hydrauliksystems ermittelt, beispielsweise in Form oder auf Grundlage der am Standort der Metallumformungsanlage aktuell vorherrschenden Außentemperatur. Der Wirkungsgrad kann ermittelt werden, indem die ermittelte Förderleistung der Pumpe, gemessen als von dem Antriebsmotor der Pumpe aufgenommene elektrische Leistung, in Relation zu der ermittelten Kühlleistung des Wärmetauschers gesetzt wird, und zusätzlich die klimatischen Bedingungen am Standort des Hydrauliksystems bzw. der Metallumformungsanlage berücksichtigt werden.

In einer Weiterbildung des vorgestellten Verfahrens ist vorgesehen, dass die Condition-Monitoring-Vorrichtung die aktuelle Wartungsdringlichkeit und/oder den aktuellen Alterungszustand des Hydrauliksystems basierend auf einem ermittelten zeitlichen Verlauf der Kühlleistung des Wärmetauschers und/oder einem ermittelten zeitlichen Verlauf der Förderleistung der Pumpe ermittelt. Für die Ermittlung der aktuellen Wartungsdringlichkeit und/oder des aktuellen Alterungszustands des Hydrauliksystems berücksichtigt die Condition-Monitoring-Vorrichtung gemäß dem vorgestellten Verfahren also die Historie der ermittelten Kühlleistung des Wärmetauschers und die Historie der ermittelten Förderleistung der Pumpe. Dadurch kann die Wartungsdringlichkeit bzw. der Alterungszustand des Hydrauliksystems besonders genau ermittelt bzw. hergeleitet werden.

In einer Weiterbildung des vorgestellten Verfahrens ist vorgesehen, dass die Condition-Monitoring-Vorrichtung auf Grundlage der ermittelten zeitlichen Verläufe der Kühlleistung des Wärmetauschers und der Förderleistung der Pumpe eine Information für eine optimierte Dimensionierung eines Wärmetauschers eines bauartgleichen Hydrauliksystems ermittelt und abrufbar speichert. Diese gewonnene und abrufbar bereitgestellte Information ermöglicht den optimierten Entwurf von neuen, bauartgleichen Metallumformungsanlagen und vermeidet den Einsatz eines überdimensioniert ausgelegten Wärmetauschers für deren Hydrauliksystem. Für die Ermittlung dieser Information wird bevorzugt auch die Umgebungstemperatur der wärmeabstrahlenden Flächen des Hydrauliksystems, beispielsweise als Historie der Außentemperatur am Standort der Metallumformungsanlage, berücksichtigt.

Das vorgestellte Verfahren wird bevorzugt auf ein sogenanntes offenes Hydrauliksystem angewendet, bei dem der Hydraulikkreislauf offen und nicht geschlossen ausgestaltet ist. Bei diesem offenen Hydrauliksystem saugt die durch einen Antriebsmotor angetriebene Pumpe das Arbeitsfluid aus einer Arbeitsfluid-Versorgungsquelle, beispielsweise ein zur Umgebungsatmosphäre nicht druckdicht bzw. offen ausgestalteter Tank, an und pumpt das angesaugte Arbeitsfluid zu dem Wärmetauscher und mindestens einem Hydraulikmotor der Metallumformungsanlage. Anschließend wird das gepumpte Arbeitsfluid in die Arbeitsfluid-Versorgungsquelle zurückgespeist. Das offene Hydrauliksystem ist im Gegensatz zum geschlossenen Hydrauliksystem kein zu der Umgebungsatmosphäre vollständig gekapseltes Hydrauliksystem.

Das vorgestellte Verfahren wird bevorzugt auf eine Metallumformungsanlage angewendet, die als eine Walzwerksanlage, eine Pressanlage oder eine Stranggussanlage ausgebildet ist.

Bei dem vorgestellten Verfahren verwendet die Condition-Monitoring-Vorrichtung eine ermittelte aktuelle Kühlleistung des in einem Umwälzkreislauf verwendeten Wärmetauschers eines Hydrauliksystems, um die aktuelle Wartungsdringlichkeit und/oder den aktuellen Alterungszustand des Hydrauliksystems zu ermitteln. Verfahren zum Ermitteln einer aktuellen Kühlleistung eines Wärmetauschers sind grundsätzlich bekannt. Die Ermittlung der aktuellen Kühlleistung des Wärmetauschers ist im Sinne des vorgestellten Verfahrens gleichbedeutend mit einer Erfassung des aktuellen Zustands des Wärmetauschers, also einer Zustandserfassung des Wärmetauschers. Als aktuelle Kühlleistung des Wärmetauschers wird die Menge der Wärmeenergie pro Zeiteinheit aufgefasst, die aktuell durch den Wärmetauscher von dem Arbeitsfluid an das Kühlfluid übertragen wird.

In einer Weiterbildung des vorgestellten Verfahrens ist vorgesehen, dass die aktuelle Kühlleistung des Wärmetausches auf besonders aufwandsarme Weise ermittelt wird. Die Erfindung nutzt hierbei die Erkenntnis, dass durch gezielte vereinfachte Annahmen der physikalischen Vorgänge in dem Wärmetauscher eine sehr einfache Zustandserfassung des Wärmetauschers bzw. Ermittlung der aktuellen Kühlleistung des Wärmetauschers möglich ist.

Die aktuelle Kühlleistung des Wärmetauschers kann in dem vorgestellten Verfahren während des laufenden Betriebs des Hydrauliksystems auf Grundlage von nur dem Arbeitsfluid zugeordneten Messwerten und Vorgabewerten ermittelt werden. Diese Zustandserfassung des Wärmetauschers basiert auf der vereinfachten Annahme, dass die von der Primärseite des Wärmetauschers abgeführte Leistung vollständig an die Sekundärseite des Wärmetauschers übertragen wird, so dass die Leistungsbetrachtung für entweder die Primarseite oder die Sekundärseite ausreicht.

Die aktuelle Kühlleistung Pw des Wärmetauschers lässt sich somit ermitteln als das Produkt der spezifischen Dichte des Fluids ρ, des Volumenstroms des Fluids Q, der spezifischen Wärmekapazität des Fluids $c_P$ und der Temperaturdifferenz $\Delta T$ zwischen der Einlassöffnung und der Auslassöffnung, über die das Fluid zu- bzw. abgeführt wird:

$$P_W = \rho \cdot Q \cdot c_P \cdot \Delta T \qquad (1)$$

Ferner wird für Hydrauliksysteme die Vereinfachung genutzt, dass bei diesen die Wärmetauscher im Umwälzkreislauf verwendet werden. Die alleinige Betrachtung der Arbeitsfluidseite des Wärmetauschers, also der Primarseite, ist für die vorgestellte Zustandserfassung besonders sinnvoll, weil dort ein konstanter Volumenstrom herrscht bzw. eingestellt werden kann, im Vergleich zu der Sekundärseite keine Verschmutzung auftritt, und - ohne Beschränkung der Erfindung darauf - ein konstanter Druckbereich von ca. 4 bar mit einer Toleranz von ±2 bar herrscht. Die obigen Vereinfachungen treffen für Wärmetauscher mit sekundärseitigen Wasser- und/oder Luftkühlern zu.

Für die Ermittlung der aktuellen Kühlleistung des Wärmetauschers gemäß dem vorgestellten Verfahren ist es grundsätzlich erforderlich, dass die spezifische Wärmekapazität und die spezifische Dichte des Arbeitsfluids vorgegeben bzw. festgelegt werden. Unter der Annahme, dass sich diese Parameter des Arbeitsfluids während des laufenden Betriebs des Hydrauliksystems nicht oder nur unwesentlich ändern, können diese Parameter einmalig arbeitsfluidspezifisch vorgegeben bzw. festgelegt werden.

Der Volumenstrom Q des den Wärmetauscher primärseitig durchströmenden Arbeitsfluids kann bei dem vorgestellten Verfahren gemessen oder vorgegeben werden. Wenn ein bekannter konstanter Volumenstrom bereitgestellt wird, beispielsweise durch eine Zahnradpumpe oder eine Schraubenspindelpumpe, dann kann der konstante Volumenstrom als Vorgabewert festgelegt werden. Im Fall eines unbekannten oder schwankenden Volumenstroms wird der den Wärmetauscher primärseitig durchlaufende Volumenstrom des Arbeitsfluids gemessen. Aufgrund relativ konstanter Verhältnisse von Volumenstrom und Viskosität des Arbeitsfluids ist eine Druckdifferenzerfassung des Arbeitsfluids zur Volumenstromindikation bzw. Volumenstrommessung hinreichend. Einer gemessenen Differenz zwischen einem gemessenen Druck des Arbeitsfluids in dem Primärkreis des Wärmetauschers und einem Referenzdruck kann ein spezifischer Volumenstrom zugeordnet werden.

Für die Ermittlung der aktuellen Kühlleistung des Wärmetauschers gemäß der Weiterbildung des vorgestellten Verfahrens ist pro Ermittlung ferner mindestens ein Messwert erforderlich, der die durch die Wärmeübertragung von der Primärseite an die Sekundärseite bewirkte Temperaturdifferenz $\Delta T$ des Arbeitsfluids,

beispielsweise zwischen der Einlassöffnung und der Auslassöffnung der Primärseite des Wärmetauschers, repräsentiert. Zum Durchführen dieser Messung kann jeweils ein Temperatursensor an der Einlassöffnung (zur Messung der Eingangstemperatur) und der Auslassöffnung (zur Messung der Ausgangstemperatur) der Primärseite des Wärmetauschers vorgesehen sein. Eine kostengünstige Temperaturerfassung kann mittels PT100-Sensoren erfolgen. Selbst in der aufwändigsten technischen Umsetzung der Weiterbildung des vorgestellten Verfahrens werden für die Ermittlung der aktuellen Kühlleistung des Wärmetauschers nur zwei Temperatursensoren und ein Volumenstromsensor oder Drucksensor eingesetzt. Dadurch wird eine technisch einfache, kostengünstige und robuste Überwachung des Wärmetauschers während des Betriebs der Metallumformungsanlage ermöglicht.

Eine Weiterbildung des vorgestellten Verfahrens sieht ferner vor, dass die ermittelte aktuelle Kühlleistung des Wärmetauschers auf einer Anzeigevorrichtung visualisiert bzw. angezeigt wird. Die permanente Visualisierung der ermittelten aktuellen Kühlleistung des Wärmetauschers für einen Operator der Anlage oder einen Konstrukteur einer neu zu entwerfenden, bauartähnlichen Anlage gewährleistet einen sicheren und effizienten Betrieb der Anlage und gestattet zudem einen optimierten Entwurf zukünftiger bauartähnlicher Anlagen.

In einer Weiterbildung des vorgestellten Verfahrens ist vorgesehen, dass die ermittelte Kühlleistung durch die Condition-Monitoring-Vorrichtung als unplausibel verworfen wird, wenn die gemessenen Werte des Arbeitsfluids außerhalb eines definierten vorgegebenen Arbeitsbereichs liegen. Damit geht einher, dass der unplausible Leistungswert nicht zur Ermittlung der aktuellen Wartungsdringlichkeit des Hydrauliksystems herangezogen wird, sondern eine Fehlermeldung erzeugt wird. Dadurch wird die Betriebssicherheit der Metallumformungsanlage gesteigert.

Die Ermittlung der aktuellen Kühlleistung des Wärmetauschers bzw. die Zustandserfassung des Wärmetauschers, wie sie oben dargestellt wurde und bezüglich der Ausführungsbeispiele im Detail dargestellt werden wird, kann auch losgelöst von dem Ermitteln der aktuellen Förderleistung der Pumpe und dem Ermitteln der aktuellen Wartungsdringlichkeit und/oder des aktuellen Alterungszustands des Hydrauliksystems erfolgen und stellt dann ein eigenständiges Verfahren zur Zustandserfassung des Wärmetauschers des Hydrauliksystems der Metallumformungsanlage dar. Der erfasste Zustand des Wärmetauschers kann zudem einem Operator der Metallumformungsanlage auf einer Anzeigevorrichtung visualisiert werden.

Die aktuelle Kühlleistung des Wärmetauschers kann mit einer Wärmetauscherzustand-Erfassungsvorrichtung ermittelt werden, die ausgebildet ist zum Empfangen von Messwerten, die aktuelle Temperaturen des den Wärmetauscher durchströmenden Arbeitsfluids repräsentieren. Die Wärmetauscherzustand-Erfassungsvorrichtung enthält beispielsweise zwei Temperatursensoren oder ist mit diesen koppelbar, die derart an/in dem Primärkreis des Wärmetauschers angeordnet sind, dass die Temperaturdifferenz ermittelt oder gemessen werden kann, um die das Arbeitsfluid beim Durchströmen des Wärmetauschers abgekühlt wird. Außerdem ist die Wärmetauscherzustand-Erfassungsvorrichtung ausgebildet zum Empfangen eines Messwertes oder eines Vorgabewerts, der zumindest einmalig den primärseitigen Volumenstrom des Wärmetauschers angibt. Ferner ist die Wärmetauscherzustand-Erfassungsvorrichtung ausgebildet zum Speichern bzw. Einprogrammieren von Vorgabewerten, wie beispielsweise der spezifischen Wärmekapazität und der spezifischen Dichte des Arbeitsfluids.

Die Wärmetauscherzustand-Erfassungsvorrichtung kann ferner ausgebildet sein zum Visualisieren bzw. Anzeigen (oder Veranlassen davon) der ermittelten Kühlleistung des Wärmetauschers auf einer Anzeigevorrichtung. In dieser Ausgestaltung ist die Wärmetauscherzustand-Erfassungsvorrichtung ein Leistungsmonitor für das Hydrauliksystem der Metallumformungsanlage. Ein derartiger Leistungsmonitor ist ausgebildet zum permanenten Ermitteln der aktuellen Kühlleistung des Wärmetauschers des offenen Hydrauliksystems der Metallumformungsanlage während des Betriebs des Hydrauliksystems und zum permanenten Anzeigen der ermittelten Kühlleistung des Wärmetauschers auf einer Anzeigevorrichtung, die in dem Leistungsmonitor aufgenommen oder diesem bereitgestellt wird.

Die Aufgabe der Erfindung wird auch durch eine Condition-Monitoring-Vorrichtung gelöst, die zum Ausführen des oben vorgestellten Verfahrens oder einer seiner Weiterbildungen ausgebildet ist. Die Condition-Monitoring-Vorrichtung umfasst die oben beschriebene Wärmetauscherzustand-Erfassungsvorrichtung oder ist mit dieser gekoppelt. Zudem ist die Condition-Monitoring-Vorrichtung ausgebildet zum Ermitteln der aktuellen Förderleistung der Pumpe des Hydrauliksystems. Hierfür reicht es aus, dass die Condition-Monitoring-Vorrichtung ausgebildet ist zum Messen oder Ermitteln der von der Pumpe aufgenommenen elektrischen Leistung. Die Condition-Monitoring-Vorrichtung kann durch einen programmierbaren Computer verkörpert sein, der das vorgestellte Verfahren unter Abarbeitung eines Programms ausführt.

In einer Weiterbildung der vorgestellten Condition-Monitoring-Vorrichtung umfasst die Condition-Monitoring-Vorrichtung zudem einen Leistungsmonitor oder ist mit diesem gekoppelt, wobei der Leistungsmonitor ausgebildet ist, die durch die Condition-Monitoring-Vorrichtung ermittelte aktuelle Kühlleistung des Wärmetauschers fortlaufend auf einer Anzeigevorrichtung anzuzeigen.

Kurze Beschreibungen der Zeichnungen

Zur Verdeutlichung des vorgeschlagenen Verfahrens und der vorgeschlagenen Condition-Monitoring-Vorrichtung werden nun Ausführungsbeispiele mit Verweis auf die folgenden Figuren vorgestellt.

Fig. 1 veranschaulicht schematisch eine Metallumformungsanlage mit einem Hydrauliksystem, dessen Zustand mit einem Ausführungsbeispiel der vorgestellten Condition-Monitoring-Vorrichtung überwacht wird.

Fig. 2 zeigt ein Flussdiagramm eines Ausführungsbeispiels des vorgestellten Verfahrens, das durch die in Fig. 1 veranschaulichte Condition-Monitoring-Vorrichtung ausgeführt wird.

Fig. 3 veranschaulicht schematisch den in Fig. 1 stark vereinfacht gezeigten Wärmetauscher und einen Leistungsmonitor, mit dem die aktuelle Kühlleistung des Wärmetauschers gemäß einem Ausführungsbeispiel des vorgestellten Verfahrens ermittelt und einem Operator angezeigt wird.

Fig. 4 zeigt ein Flussdiagramm eines Verfahrens, das von dem in Fig. 3 veranschaulichten Leistungsmonitors zum Ermitteln der aktuellen Kühlleistung des Wärmetauschers gemäß einem Ausführungsbeispiel des vorgestellten Verfahrens durchgeführt wird.

In den aufgeführten Figuren sind identische oder ähnliche Komponenten figurenübergreifend mit denselben Bezugszeichen bezeichnet.

Ausführungsbeispiele der Erfindung

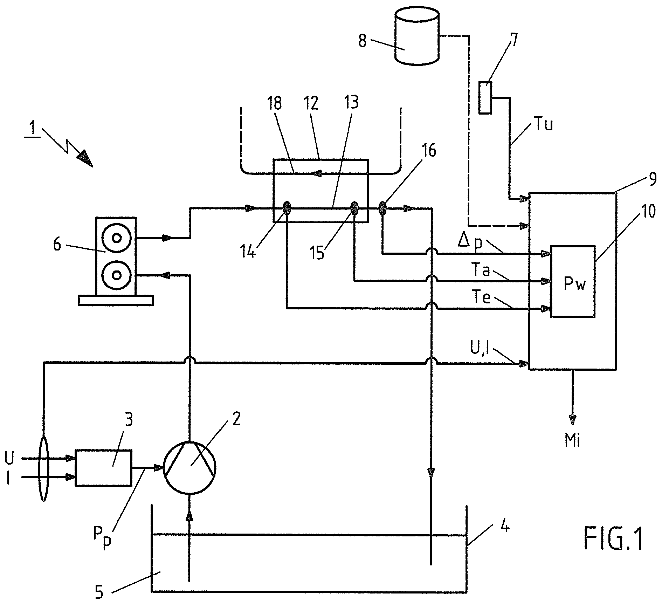

In Fig. 1 ist schematisch eine Metallumformungsanlage mit einem Hydrauliksystem veranschaulicht, dessen Zustand mit einem Ausführungsbeispiel der vorgestellten Condition-Monitoring-Vorrichtung überwacht wird. Die Metallumformungsanlage 1 ist beispielhaft, ohne Beschränkung der vorliegenden Erfindung auf eine derartige Metallumformungsanlage, als ein Walzwerk mit mehreren, mit einem Arbeitsfluid eines Hydrauliksystems betriebenen Walzgerüsten 6 ausgebildet.

Die Metallumformungsanlage 1 weist ein Hydrauliksystem mit einem offenen Hydraulikkreislauf auf, bei dem ein Arbeitsfluid 5 aus einer Arbeitsfluid-Versorgungsquelle 4, beispielsweise ein Tank, durch eine mit einem elektrischen Motor 3 angetriebene Pumpe 2 zu den Walzgerüsten 6, einem Wärmetauscher 12 und anschließend wieder zu der Arbeitsfluid-Versorgungsquelle 4 gepumpt wird. Zwischen den Komponenten 2, 6, 12 und 4 des Hydrauliksystems sind jeweilige Hydraulikleitungen vorgesehen, durch die das Arbeitsfluid gepumpt wird. Das Hydrauliksystem ist beispielsweise so ausgelegt, dass das Arbeitsfluid den Walzgerüsten 6 mit einem konstanten Volumenstrom und mit einem vorgegebenen Druckbereich von 4 bar mit einer Toleranz von ±2 bar bereitgestellt wird. Das Arbeitsfluid wird durch einen Primärkreislaufabschnitt 13 des Wärmetauschers 12 gepumpt, so dass ein Teil der Wärmeenergie des Arbeitsfluids an ein Kühlfluid, beispielsweise Kühlwasser, übertragen wird, das einen Sekundärkreislaufabschnitt 18 des Wärmetauschers 12 durchströmt.

Die in Fig. 1 schematisch veranschaulichte Metallumformungsanlage mit dem Hydrauliksystem 1 ist mit einem Ausführungsbeispiel einer Condition-Monitoring-Vorrichtung 9 gekoppelt. Die Condition-Monitoring-Vorrichtung 9 ist ausgebildet zum Ermitteln der aktuellen Wartungsdringlichkeit und/oder des aktuellen Wartungszustands des Hydrauliksystems der Metallumformungsanlage 1 gemäß dem vorgestellten Verfahren. Die in Fig. 1 veranschaulichte Condition-Monitoring-Vorrichtung 9 ermittelt die aktuelle Wartungsdringlichkeit und/oder den aktuellen Wartungszustand des Hydrauliksystems als einen Wert Mi, der beispielsweise die ermittelte aktuelle Wartungsdringlichkeit als einen ganzzahligen Wert zwischen 0 (Wartung nicht erforderlich; Neuzustand) und 100 (Wartung unbedingt erforderlich) repräsentiert.

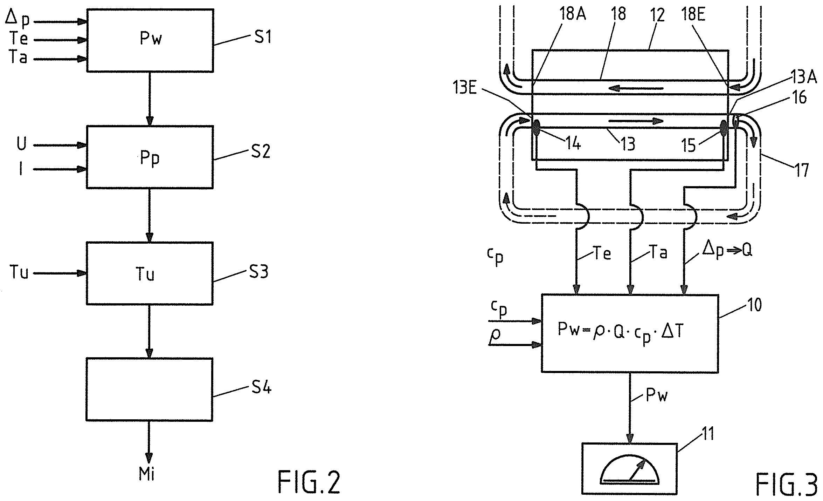

Wie in Fig. 1 veranschaulicht und mit Bezug zu Fig. 3 detaillierter erläutert, ist der Wärmetauscher 12 mit auf seiner Primärseite eingangsseitig bzw. ausgangsseitig angeordneten Temperatursensoren 14 und 15 versehen, deren Temperaturmesswerte Te bzw. Ta an die Condition-Monitoring-Vorrichtung 9 bzw. eine darin aufgenommene Wärmetauscherzustand-Erfassungseinrichtung 10 gespeist werden.

Ferner ist die Condition-Monitoring-Vorrichtung 9 ausgebildet, die von dem elektrischen Antriebsmotor 3 der Pumpe 2 aufgenommene elektrische Leistung auf Grundlage der gemessenen elektrischen Ströme I und Spannungen U zu berechnen, mit denen der elektrisch angetriebene Antriebsmotor 3 während des Betriebs der Metallumformungsanlage versorgt wird. Die Condition-Monitoring-Vorrichtung 9 ist ausgebildet, aus der berechneten aufgenommenen elektrischen Leistung des Antriebsmotors 3 die aktuelle Förderleistung (in Fig. 1 unter Vernachlässigung von Reibungsverlusten als Pp veranschaulicht) der Pumpe 2 mittels Berechnung zu ermitteln. Der elektrische Antriebsmotor 3 kann als eine dreiphasige Asynchronmaschine ausgestaltet sein. In diesem Fall werden die gemessenen Spannungen und Ströme des Antriebsmotors 3 der Condition-Monitoring-Vorrichtung 9 phasenspezifisch zugeführt, so dass die Condition-Monitoring-Vorrichtung 9 aus diesen Messwerten die aktuelle Förderleistung der Pumpe 2 berechnen kann.

Außerdem ist die in Fig. 1 veranschaulichte Condition-Monitoring-Vorrichtung 9 mit einem Außentemperatursensor 7 gekoppelt, der eine am Standort der Metallumformungsanlage 1 aktuell vorherrschende Außentemperatur Tu misst und die Messwerte an die Condition-Monitoring-Vorrichtung 9 überträgt. Die Condition-Monitoring-Vorrichtung 9 verwendet diese Messwerte Tu als Information über die aktuelle Umgebungstemperatur der wärmeabstrahlenden Flächen des Hydrauliksystems und ermittelt die aktuelle Wartungsdringlichkeit und/oder den aktuellen Alterungszustand des Hydrauliksystems auch, zusätzlich zu der ermittelten aktuellen Kühlleistung Pw des Wärmetauschers 12 und der ermittelten aktuellen Förderleistung Pp der Pumpe 2, auf Grundlage der Messwerte Tu. Optional oder alternativ kann die Condition-Monitoring-Vorrichtung 9 am Standort der Metallumformungsanlage 1 in der Vergangenheit oder aktuell vorherrschende Außentemperaturen auch als Daten von einem externen Server 8 eines Wetterdienstes abrufen.

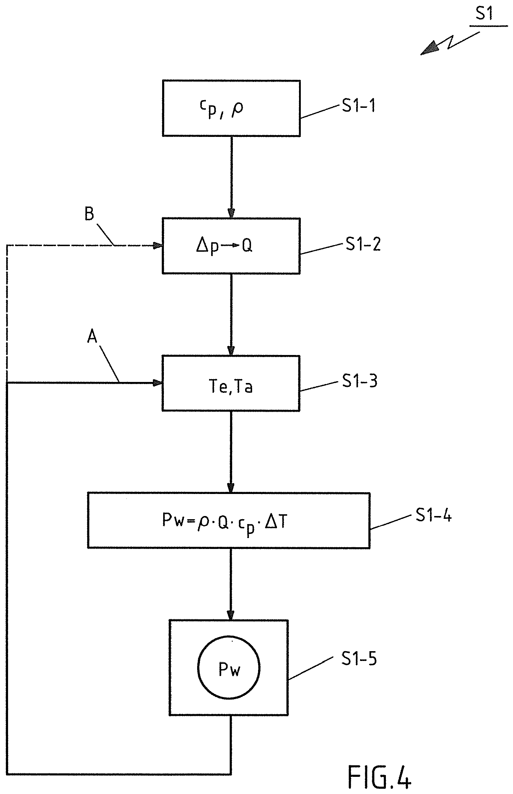

In Fig. 2 ist ein Flussdiagramm eines Ausführungsbeispiels des vorgestellten Verfahrens dargestellt, das durch die in Fig. 1 veranschaulichte Condition-Monitoring-Vorrichtung 9 ausgeführt wird. Im Schritt S1 wird die aktuelle Kühlleistung Pw des Wärmetauschers 12 auf Grundlage von Messwerten $\Delta p$ des Drucksensors 16, Te des Temperatursensors 14 und Ta des Temperatursensors 15 berechnet, was mit Verweis auf Fig. 3 und Fig. 4 unten detaillierter erläutert ist. Im Schritt S2 wird die aktuelle Förderleistung Pp der Pumpe 2 auf Grundlage der Spannungs- und Strommesswerte U, I des Antriebsmotors 3 berechnet. Im Schritt S3 wird die aktuell am Standort der Metallumformungsanlage 1 vorherrschende Außentemperatur Tu eingelesen. Die Schritte S1 bis S3 können in beliebiger zeitlicher Abfolge oder auch zeitgleich abgearbeitet werden. Im den Schritten S1 bis S3 nachfolgenden Schritt S4 ermittelt die Condition-Monitoring-Vorrichtung 9 auf Grundlage der in den Schritten S1 bis S3 ermittelten Werte Pw, Pp und Tu einen Wert Mi, der die aktuelle Wartungsdringlichkeit bzw. den aktuellen Alterungszustand des Hydrauliksystems der Metallumformungsanlage 1 repräsentiert. Die Schritte S1 bis S4 werden während des Betriebs der Metallumformungsanlage 1 laufend wiederholt, so dass der Wert Mi laufend aktualisiert wird.

In Fig. 3 ist der in Fig. 1 stark vereinfacht gezeigte Wärmetauscher 12 detaillierter schematisch dargestellt. Zudem ist in Fig. 3 die in Fig. 1 als Teil der Condition-Monitoring-Vorrichtung 9 gezeigte Wärmetauscherzustand-Erfassungseinrichtung 10 detaillierter veranschaulicht, die zudem mit einer Anzeigevorrichtung 11 gekoppelt ist. Die Wärmetauscherzustand-Erfassungseinrichtung 10 und die Anzeigevorrichtung 11 bilden einen Leistungsmonitor, mit dem die aktuelle Kühlleistung Pw des Wärmetauschers 12 gemäß einem Ausführungsbeispiel des vorgestellten Verfahrens ermittelt und einem Operator der Metallumformungsanlage angezeigt wird. Der Leistungsmonitor ist ausgebildet, die Kühlleistung Pw des Wärmetauschers 12 während des Betriebs des Hydrauliksystems kontinuierlich zu ermitteln und anzuzeigen.

Der in Fig. 3 beispielhaft veranschaulichte Wärmetauscher 12 ist gemäß dem Gegenstromprinzip ausgestaltet und weist einen Primärkreislaufabschnitt 13 zum Durchleiten des Arbeitsfluids des Hydrauliksystems von einer primärseitigen Einlassöffnung 13E zu einer primärseitigen Auslassöffnung 13A und einen Sekundärkreislaufabschnitt 18 zum Durchleiten eines Kühlfluids von einer sekundärseitigen Einlassöffnung 18E zu einer sekundärseitigen Auslassöffnung 18A auf. An der Einlassöffnung 13E ist ein Temperatursensor 14 zum Erfassen der Temperatur Te des in den Primärkreislaufabschnitt 13 eingebrachten Arbeitsfluids bereitgestellt. An der Auslassöffnung 13A ist ein Temperatursensor 15 zum Erfassen der Temperatur Ta des aus dem Primärkreislaufabschnitt 13 abgeführten Arbeitsfluids bereitgestellt. Ferner ist an der Auslassöffnung 13A ein Drucksensor 16 zum Erfassen einer Druckdifferenz $\Delta p$ gegenüber einem Referenzdruck bereitgestellt. Der Drucksensor 16 kann alternativ als ein Volumenstromsensor zum direkten Messen des Volumenstroms in dem Primärkreislaufabschnitt 13 ausgebildet sein. Das Hydrauliksystem ist so ausgebildet, dass das Arbeitsfluid in einem Umwälzkreislauf 17 (in Fig. 3 nur stark vereinfacht dargestellt) dem Wärmetauscher 12 zugeführt wird. Das Arbeitsfluid wird während des laufenden Betriebs der Metallumformungsanlage ferner in Fig. 3 nicht gezeigten Arbeitskomponenten der Metallumformungsanlage zugeführt.

Die Wärmetauscherzustand-Erfassungseinrichtung 10 ist über Signalleitungen mit dem Wärmetauscher 12 gekoppelt und empfängt über die Signalleitungen die Messwerte der Temperatursensoren 14, 15 und des Drucksensors 16. Die Wärmetauscherzustand-Erfassungseinrichtung 10 ist ausgebildet, den empfangenen Messwert des Drucksensors 16 einem entsprechendem Volumenstrom Q zuzuordnen. Ferner ist die Wärmetauscherzustand-Erfassungseinrichtung 10 ausgebildet zum Berechnen der Temperaturdifferenz $\Delta T$ zwischen den empfangenen Messwerten Te und Ta. Außerdem ist die Wärmetauscherzustand-Erfassungseinrichtung 10 ausgebildet zum Empfangen und Speichern von Vorgabewerten für die spezifische Dichte p und die spezifische Wärmekapazität $c_p$ des Arbeitsfluids. Die Wärmetauscherzustand-Erfassungseinrichtung 10 kann auch für eine Mehrzahl von Arbeitsfluids die jeweilige spezifische Dichte und spezifische Wärmekapazität speichern. Die Wärmetauscherzustand-Erfassungseinrichtung 10 ist ausgebildet zum Ermitteln der aktuellen Kühlleistung Pw des Wärmetauschers auf Grundlage der empfangenen Messwerte Te, Ta (bzw. $\Delta T$), des empfangenen Messwertes $\Delta p$ (bzw. Q) und der gespeicherten Vorgabewerte p und $c_p$ des Arbeitsfluids gemäß der obigen Gleichung (1). Die Wärmetauscherzustand-Erfassungseinrichtung 10 ist mit einer Anzeigevorrichtung 11 gekoppelt, die die durch die Wärmetauscherzustand-Erfassungseinrichtung 10 ermittelte Kühlleistung Pw einem Operator anzeigt. Die Wärmetauscherzustand-Erfassungseinrichtung 10 ist ferner ausgebildet, zumindest aktuell gemessene Temperaturwerte fortlaufend zu empfangen und die Kühlleistung Pw auf Grundlage dieser gemessenen Temperaturwerte zu ermitteln.

Fig. 4 zeigt ein Flussdiagramm eines Verfahrens, das von dem in Fig. 3 veranschaulichten Leistungsmonitors zum Ermitteln der aktuellen Kühlleistung des Wärmetauschers gemäß einem Ausführungsbeispiel des vorgestellten Verfahrens durchgeführt wird. Konkret zeigt Fig. 4 zwei alternative Ausführungsbeispiele des in Fig. 2 veranschaulichten Verfahrensschrittes S1 zum Ermitteln der aktuellen Kühlleistung Pw des Wärmetauschers 12, wobei der Schritt S1-5 zum Anzeigen der ermittelten Kühlleistung Pw optional ist.

Im Schritt S1-1 werden der Wärmetauscherzustand-Erfassungseinrichtung 10 die Werte p und $c_p$ des Arbeitsfluids als Vorgabewerte vorgegeben. Im Anschluss an Schritt S1-1 wird im Schritt S1-2 die Druckdifferenz $\Delta p$ durch den Drucksensor 16 gemessen und an die Wärmetauscherzustand-Erfassungseinrichtung 10 übertragen, die den Messwert einem Volumenstrom Q zuordnet.

Im Anschluss an Schritt S1-2 werden im Schritt S1-3 die Temperaturen Te und Ta am Eingang bzw. Ausgang des Primärkreislaufabschnitts 13 des Wärmetauschers 12 gemessen und der Wärmetauscherzustand-Erfassungseinrichtung 10 als entsprechende Signale zugeführt.

Auf den Schritt S1-3 folgt der Schritt S1-4. Im Schritt S1-4 wird die Temperaturdifferenz $\Delta T$ als Differenz zwischen Te und Ta berechnet. Nur wenn die Messwerte Te, Ta und $\Delta p$ bzw. Q innerhalb eines vordefinierten Arbeitsbereichs des Wärmetauschers 12 liegen, wird anschließend im Schritt S1-4 die Kühlleistung Pw des Wärmetauschers 12 auf Grundlage der oben dargestellten Gleichung (1) ermittelt und an eine Anzeigevorrichtung 11 übermittelt. Andernfalls wird die Anzeigevorrichtung 11 im Schritt S1-5 zum Ausgeben einer Fehlermeldung veranlasst.

Im Anschluss an Schritt S1-4 mit Messwerten Te, Ta und $\Delta p$ bzw. Q innerhalb des vordefinierten Arbeitsbereichs des Wärmetauschers 12 präsentiert im Schritt S1-5 die Anzeigevorrichtung 11 den von der Wärmetauscherzustand-Erfassungseinrichtung 10 ermittelten Kühlleistungswert Pw.

Im Anschluss an Schritt S1-5 werden gemäß einer ersten Alternative A, die nur eine einmalige direkte oder indirekte Messung des Volumenstroms bis zur nächsten Unterbrechung des Betriebs des Hydrauliksystems vorsieht, erneut die Schritte S1-3, S1-4 und S1-5 ausgeführt. Gemäß einer Alternative B mit wiederholter Messung des Volumenstroms werden im Anschluss an Schritt S1-5 erneut die Schritte S1-2, S1-3, S1-4 und S1-5 ausgeführt. Die Wiederholung der Schritte S1-3 bis S1-5 gemäß Variante A oder der Schritte S1-2 bis S1-5 gemäß Variante B erfolgt während des gesamten Betriebs der den Wärmetauscher 12 aufweisenden Metallumformungsanlage 1.

Bezugszeichenliste

| 1 | Metallumformungsanlage |
| 2 | Pumpe des Hydrauliksystems |
| 3 | Antriebsmotor der Pumpe 2 |
| 4 | Arbeitsfluid-Versorgungsquelle |
| 5 | Arbeitsfluid |
| 6 | Walzgerüst(e) |
| 7 | Außentemperatursensor |

| 8 | Server |
|---|---|
| 9 | Condition-Monitoring-Vorrichtung |
| 10 | Wärmetauscherzustand-Erfassungsvorrichtung |
| 11 | Anzeigevorrichtung |
| 12 | Wärmetauscher |
| 13 | Primärkreislaufabschnitt des Wärmetauschers 10 |
| 13A, 13E | Auslassöffnung bzw. Einlassöffnung des Primärkreislaufabschnitts |
| 13 14 | Temperatursensor am Eingang des Primärkreislaufabschnitts 13 |
| 15 | Temperatursensor am Ausgang des Primärkreislaufabschnitts 13 |
| 16 | Drucksensor bzw. Volumenstromsensor |
| 17 | Umwälzkreislauf des Primärkreislaufs |
| 18 | Sekundärkreislaufabschnitt des Wärmetauschers |
| 18A, 18E | Auslassöffnung bzw. Einlassöffnung des Sekundärkreislaufabschnitts |
| 18 Mi | Information über aktuelle Wartungsdringlichkeit |
| Pp | Förderleistung der Pumpe |
| Pw | Kühlleistung des Wärmetauschers |
| Te, | Taeingangsseitige bzw. ausgangsseitige Temperatur an der Primärseite des Wärmetauschers |
| Tu | Außentemperatur |

**Patentansprüche**

1. Verfahren zum Condition Monitoring eines Hydrauliksystems, wobei das Hydrauliksystem mit einer durch einen Antriebsmotor (3) antreibbaren Pumpe (2) zur Bereitstellung eines Arbeitsfluids in dem Hydrauliksystem und mit einem Wärmetauscher (12) gekoppelt oder versehen ist, dessen Primärseite (13) von dem Arbeitsfluid durchströmt wird und dessen Sekundärseite (18) ein Kühlfluid zur Aufnahme eines Teils einer Wärmeenergie des Arbeitsfluids bereitgestellt wird, **dadurch gekennzeichnet, dass** das Verfahren für das Hydrauliksystem einer Metallumformungsanlage (1) vorgesehen ist und die während des Betriebs des Hydrauliksystems durch eine Condition-Monitoring-Vorrichtung (9) veranlassten oder durchgeführten Schritte aufweist:

   a) Ermitteln (S1) einer aktuellen Kühlleistung (Pw) des Wärmetauschers (12);
   b) Ermitteln (S2) einer aktuellen Förderleistung (Pp) der Pumpe (2); und
   c) Ermitteln (S4) einer aktuellen Wartungsdringlichkeit und/oder eines aktuellen Alterungszustands des Hydrauliksystems (Mi) auf Grundlage der ermittelten aktuellen Kühlleistung (Pw) des Wärmetauschers und der ermittelten aktuellen Förderleistung (Pp) der Pumpe.

2. Verfahren nach Anspruch 1, **dadurch gekennzeichnet, dass** die Condition-Monitoring-Vorrichtung (9) ferner eine aktuelle Umgebungstemperatur (Tu) wärmeabstrahlender Flächen des Hydrauliksystems ermittelt (S3) und die aktuelle Wartungsdringlichkeit und/oder den aktuellen Alterungszustand des Hydrauliksystems (Mi) auch unter Berücksichtigung der ermittelten Umgebungstemperatur (Tu) bestimmt.

3. Verfahren nach Anspruch 2, **dadurch gekennzeichnet, dass** die Condition-Monitoring-Vorrichtung (9) als die aktuelle Umgebungstemperatur (Tu) der wärmeabstrahlenden Flächen des Hydrauliksystems eine Außentemperatur am Standort des Hydrauliksystems und/oder der Metallumformungsanlage, insbesondere durch Abruf von auf den Standort bezogenen Wetterdaten eines Wetterdienst-Servers (8), ermittelt.

4. Verfahren nach einem der Ansprüche 1 bis 3, **dadurch gekennzeichnet, dass** die Condition-Monitoring-Vorrichtung (9) auf Grundlage der ermittelten Kühlleistung (Pw) des Wärmetauschers und der ermittelten Förderleistung (Pp) der Pumpe sowie bevorzugt der ermittelten Umgebungstemperatur (Tu) der wärmeabstrahlenden Flächen des Hydrauliksystems eine Information über einen Wirkungsgrad des Hydrauliksystems ermittelt.

5. Verfahren nach einem der Ansprüche 1 bis 4, **dadurch gekennzeichnet, dass** die Condition-Monitoring-Vorrichtung (9) die aktuelle Wartungsdringlichkeit und/oder den aktuellen Alterungszustand des Hydrauliksystems (Mi) basierend auf einem ermittelten zeitlichen Verlauf der Kühlleistung des Wärmetauschers und/oder einem ermittelten zeitlichen Verlauf der Förderleistung der Pumpe ermittelt.

6. Verfahren nach Anspruch 5, **dadurch gekennzeichnet, dass** die Condition-Monitoring-Vorrichtung (9) auf Grundlage der ermittelten zeitlichen Verläufe der Kühlleistung des Wärmetauschers und der Förderleistung der Pumpe sowie bevorzugt der ermittelten Umgebungstemperatur der wärmeabstrahlenden Flächen des Hydrauliksystems eine Information für eine optimierte Dimensionierung eines Wärmetauschers eines bauartgleichen Hydrauliksystems ermittelt und abrufbar speichert.

7. Verfahren nach einem der Ansprüche 1 bis 6, **dadurch gekennzeichnet, dass** das Hydrauliksystem als ein offener Hydraulikkreislauf ausgestaltet ist.

8. Verfahren nach einem der Ansprüche 1 bis 7, **dadurch gekennzeichnet, dass** die Metallumformungsanlage (1) als eine Walzwerksanlage, eine Pressanlage oder eine Stranggussanlage ausgebildet ist.

9. Verfahren nach einem der Ansprüche 1 bis 8, **dadurch gekennzeichnet, dass** die Condition-Monitoring-Vorrichtung (9) die aktuelle Kühlleistung (Pw) des Wärmetauschers auf Grundlage von nur dem Arbeitsfluid zugeordneten Messwerten (Te, Ta, $\Delta$P, Q) und Vorgabewerten (p, cp) ermittelt (S1-4).

10. Verfahren nach einem der Ansprüche 1 bis 9, **dadurch gekennzeichnet, dass** die Condition-Monitoring-Vorrichtung (9) die aktuelle Kühlleistung (Pw) des Wärmetauschers auf Grundlage einer durch den Wärmetauscher (12) herbeigeführten, gemessenen (S1-3) Temperaturdifferenz ($\Delta$T) des Arbeitsfluids ermittelt (S1-4).

11. Verfahren nach einem der Ansprüche 1 bis 10, **dadurch gekennzeichnet, dass** die Condition-Monitoring-Vorrichtung (9) die aktuelle Kühlleistung (Pw) des Wärmetauschers auf Grundlage eines gemessenen (S1-2) oder vorgegebenen Volumenstroms (Q) des Arbeitsfluids ermittelt (S1-4).

12. Verfahren nach Anspruch 11, **dadurch gekennzeichnet, dass** die Condition-Monitoring-Vorrichtung (9) den Volumenstrom (Q) des Arbeitsfluids durch Messen einer Druckdifferenz ($\Delta$p) des Arbeitsfluids ermittelt (S1-2).

13. Verfahren nach einem der Ansprüche 9 bis 12, **dadurch gekennzeichnet, dass** die Vorgabewerte die spezifische Wärmekapazität des Arbeitsfluids ($c_p$) und/oder die spezifische Dichte des Arbeitsfluids (p) umfassen.

14. Verfahren nach einem der Ansprüche 1 bis 13, **dadurch gekennzeichnet, dass** die ermittelte Kühlleistung (Pw) durch die Condition-Monitoring-Vorrichtung (9) als unplausibel verworfen wird, wenn die gemessenen Werte des Arbeitsfluids außerhalb eines definierten Arbeitsbereichs liegen.

15. Condition-Monitoring-Vorrichtung (9) für ein Hydrauliksystem einer Metallumformungsanlage (1), wobei das Hydrauliksystem mit einer antreibbaren Pumpe (2) zur Bereitstellung eines Arbeitsfluids in dem Hydrauliksystem und mit einem Wärmetauscher (12) gekoppelt oder versehen ist, dessen Primärseite (13) von dem Arbeitsfluid durchströmbar ist und dessen Sekundärseite (18) ein Kühlfluid zur Aufnahme eines Teils einer Wärmeenergie des Arbeitsfluids bereitstellbar ist, **dadurch gekennzeichnet, dass** die Condition-Monitoring-Vorrichtung (9) zur Ausführung eines Verfahrens nach einem der Ansprüche 1 bis 14 ausgebildet ist.

16. Condition-Monitoring-Vorrichtung (9) nach Anspruch 15, **dadurch gekennzeichnet, dass** die Condition-Monitoring-Vorrichtung einen Leistungsmonitor (10, 11) umfasst oder mit diesem gekoppelt ist, wobei der Leistungsmonitor ausgebildet ist, die durch die Condition-Monitoring-Vorrichtung ermittelte aktuelle Kühlleistung (Pw) des Wärmetauschers (12) auf einer Anzeigevorrichtung (11) anzuzeigen.

**Claims**

1. Method for condition-monitoring of a hydraulic system, wherein the hydraulic system is coupled or provided with a pump (2), which is drivable by a drive motor (3), for providing a work fluid in the hydraulic system and with a heat exchanger (12), the primary side (13) of which is flowed through by the work fluid and to the secondary side (18) of which a cooling fluid for take-up of a part of a thermal energy of the work fluid is supplied, **characterised in that** the method is provided for the hydraulic system of a metal reshaping plant (1) and comprises the steps, which are caused or performed by a condition-monitoring device (9) during operation of the hydraulic system, of:

    a) determining (S1) an instantaneous cooling performance (Pw) of the heat exchanger (12);
    b) determining (S2) an instantaneous conveying performance (Pp) of the pump (2); and
    c) determining (S4) an instantaneous maintenance urgency and/or an instantaneous ageing state of the hydraulic system (Mi) on the basis of the determined instantaneous cooling performance (Pw) of the heat exchanger and the determined instantaneous conveying performance (Pp) of the pump.

2. Method according to claim 1, **characterised in that** the condition-monitoring device (9) additionally determines an instantaneous ambient temperature (Tu) of heat-radiating surfaces of the hydraulic system (S3) and ascertains the instantaneous maintenance urgency and/or the instantaneous ageing state of the hydraulic system (Mi) also with consideration of the determined ambient temperature (Tu).

3. Method according to claim 2, **characterised in that** the condition-monitoring device (9) determines, as the instantaneous ambient temperature (Tu) of the heat-radiating surfaces of the hydraulic system, an external temperature at the location of the hydraulic system and/or of the metal reshaping plant, particularly by calling up weather data, which relates to the location, of a weather-service server (8).

4. Method according to any one of claims 1 to 3, **characterised in that** the condition-monitoring device (9) determines information about an efficiency of the hydraulic system on the basis of the determined cooling performance (Pw) of the heat exchanger and the determined conveying performance (Pp) of the pump as well as preferably the determined ambient temperature (Tu) of the heat-radiating surfaces of the hydraulic system.

5. Method according to any one of claims 1 to 4, **characterised in that** the condition-monitoring device (9) determines the instantaneous maintenance urgency and/or the instantaneous ageing state of the hydraulic system (Mi) based on a determined time plot of the cooling performance of the heat exchanger and/or a determined time plot of the conveying performance of the pump.

6. Method according to claim 5, **characterised in that** the condition-monitoring device (9) on the basis of the determined time plots of the cooling performance of the heat exchanger and the conveying performance of the pump as well as preferably the determined ambient temperature of the heat-radiating surfaces of the hydraulic system determines information for an opitimised dimensioning of a heat exchanger of a constructionally identical hydraulic system and stores the information to be able to be called up.

7. Method according to any one of claims 1 to 6, **characterised in that** the hydraulic system is embodied as an open hydraulic circuit.

8. Method according to any one of claims 1 to 7, **characterised in that** the metal reshaping plant (1) is constructed as a rolling mill, a press installation or an extruder.

9. Method according to any one of claims 1 to 8, **characterised in that** the condition-monitoring device (9) determines (S1-4) the instantaneous cooling performance (Pw) of the heat exchanger on the basis of only measurement values (Te, Ta, $\Delta$P, Q) and default values (p, cp) associated with the work fluid.

10. Method according to any one of claims 1 to 9, **characterised in that** the condition-monitoring device (9) determines (S1-4) the instantaneous cooling performance (Pw) of the heat exchanger on the basis of a temperature difference ($\Delta$T), which is caused by the heat exchanger (12) and measured (S1-3), of the work fluid.

11. Method according to any one of claims 1 to 10, **characterised in that** the condition-monitoring device (9) determines (S1-4) the instantaneous cooling performance (Pw) of the heat exchanger on the basis of a measured (S1-2) or predetermined volume flow (Q) of the work fluid.

12. Method according to claim 11, **characterised in that** the condition-monitoring device (9) determines (S1-2) the volume flow (Q) of the work fluid by measuring a pressure difference ($\Delta$p) of the work fluid.

13. Method according to any one of claims 9 to 12, **characterised in that** the default values comprise the specific thermal capacity (cp) of the work fluid and/or the specific density (p) of the work fluid.

14. Method according to any one of claims 1 to 13, **characterised in that** the determined cooling performance (Pw) is rejected by the condition-monitoring device (9) as implausible if the measured values of the work fluid lie outside a defined work range.

15. Condition-monitoring device (9) for a hydraulic system of a metal reshaping plant (1), wherein the hydraulic system is coupled or provided with a drivable pump (2) for provision of a work fluid in the hydraulic system and with a heat exchanger (12), the primary side (13) of which can be flowed through by the work fluid and to the secondary side (18) of which a cooling fluid for take-up of a part of a thermal energy of the work fluid can be supplied, **characterised in that** the condition-monitoring device (9) is configured for performance of a method according to any one of claims 1 to 14.

16. Condition-monitoring device (9) according to claim 15, **characterised in that** the condition-monitoring device comprises a performance monitor (10, 11) or is coupled therewith, wherein the performance monitor is configured to display on a display device (11) the instantaneous cooling performance (Pw), which is determined by the condition-monitoring device, of the heat exchanger (12).

## Revendications

1. Procédé destiné à la surveillance d'état d'un système hydraulique ; dans lequel le système hydraulique est accouplé à une pompe (2) qui peut être entraînée par un moteur d'entraînement (3) à des fins de mise à disposition d'un fluide de travail dans le système hydraulique et à un échangeur de chaleur (2) ou est muni de ladite pompe et dudit échangeur de chaleur, dont le côté primaire (13) est traversé par le fluide de travail et au côté secondaire (18) duquel est fourni un fluide de refroidissement qui est destiné à absorber une partie d'une énergie thermique du fluide de travail, **caractérisé en ce que** le procédé est prévu pour le système hydraulique d'une installation de transformation métallique (1) et présente les étapes qui sont exécutées ou qui sont mises en oeuvre par l'intermédiaire d'un dispositif (9) destiné à la surveillance d'état au cours de l'exploitation du système hydraulique, à savoir :

    a) la détermination (S1) d'une puissance de refroidissement en vigueur (Pw) de l'échangeur de chaleur (12) ;

    b) la détermination (S2) d'une capacité en vigueur (Pp) de la pompe (2) ; et

    c) la détermination (S4) d'une urgence d'entretien en vigueur et/ou d'un état de vieillissement en vigueur du système hydraulique (Mi) sur la base de la puissance de refroidissement en vigueur (Pw) de l'échangeur de chaleur qui a été déterminée et de la capacité en vigueur (Pp) de la pompe qui a été déterminée.

2. Procédé selon la revendication 1, **caractérisé en ce que** le dispositif de surveillance d'état (9) détermine en outre (S3) une température ambiante en vigueur (Tu) de surfaces du système hydraulique qui rayonnent la chaleur et définit l'urgence d'entretien en vigueur et/ou l'état de vieillissement en vigueur du système hydraulique (Mi) en prenant également en compte la température ambiante (Tu) qui a été déterminée.

3. Procédé selon la revendication 2, **caractérisé en ce que** le dispositif de surveillance d'état (9) détermine, à titre de la température ambiante en vigueur (Tu) des surfaces du système hydraulique, qui rayonnent la chaleur, une température externe à l'emplacement du système hydraulique et/ou de l'installation de transformation métallique, en particulier en se référant aux données météorologiques d'un serveur (8) qui délivre un service météorologique, qui correspondent à l'emplacement en question.

4. Procédé selon l'une quelconque des revendications 1 à 3, **caractérisé en ce que** le dispositif de surveillance d'état (9) détermine, sur la base de la puissance de refroidissement (Pw) de l'échangeur de chaleur qui a été déterminée et sur la base de la capacité (Pp) de la pompe qui a été déterminée, et de préférence sur la base de la température ambiante (Tu), qui a été déterminée, des surfaces du système hydraulique qui rayonnent la chaleur, une information qui concerne un degré d'efficacité du système hydraulique.

5. Procédé selon l'une quelconque des revendications 1 à 4, **caractérisé en ce que** le dispositif de surveillance d'état (9) détermine l'urgence d'entretien en vigueur et/ou l'état de vieillissement en vigueur du système hydraulique (Mi) en se basant sur une allure temporelle qui a été déterminée, de la puissance de refroidissement de l'échangeur de chaleur et/ou sur une allure temporelle, qui a été déterminée, de la capacité de la pompe.

6. Procédé selon la revendication 5, **caractérisé en ce que** le dispositif de surveillance d'état (9) détermine et met en mémoire d'une manière accessible, sur la base des allures temporelles de la puissance de refroidissement de l'échangeur de chaleur qui ont été déterminées et sur la base de la capacité de la pompe, et de préférence sur la base de la température ambiante, qui a été déterminée, des surfaces du système hydraulique qui rayonnent la chaleur, une information pour un dimensionnement optimisé d'un échangeur de chaleur d'un système hydraulique du même type.

7. Procédé selon l'une quelconque des revendications 1 à 6, **caractérisé en ce que** le système hydraulique est réalisé sous la forme d'un circuit hydraulique ouvert.

8. Procédé selon l'une quelconque des revendications 1 à 7, **caractérisé en ce que** l'installation de transformation métallique (1) est réalisée sous la forme d'une installation sidérurgique, d'une installation de presse ou une installation de coulée continue.

9. Procédé selon l'une quelconque des revendications 1 à 8, **caractérisé en ce que** le dispositif de surveillance d'état (9) détermine (S1-4) la puissance de refroidissement en vigueur (Pw) de l'échangeur de chaleur sur la base de valeurs de mesure (Te, Ta, $\Delta$P, Q) et de valeurs de consigne (p, cp) fournies uniquement au fluide de travail.

10. Procédé selon l'une quelconque des revendications 1 à 9, **caractérisé en ce que** le dispositif de surveillance d'état (9) détermine (S1-4) la puissance de refroidissement en vigueur (Pw) de l'échangeur de chaleur sur la base d'une différence de température ($\Delta$T) du fluide de travail, qui a été mesurée (S1-3), générée par l'échangeur de chaleur (12).

11. Procédé selon l'une quelconque des revendications 1 à 10, **caractérisé en ce que** le dispositif de surveillance d'état (9) détermine (S1-4) la puissance de refroidissement en vigueur (Pw) de l'échangeur de chaleur sur la base d'un débit volumétrique (Q) du fluide de travail qui a été mesuré (S1-2) ou bien qui a été défini au préalable.

12. Procédé selon la revendication 11, **caractérisé en ce que** le dispositif de surveillance d'état (9) détermine (S1-2) le débit volumétrique (Q) du fluide travail par l'intermédiaire d'une mesure d'une différence de pression ($\Delta$p) du fluide travail.

13. Procédé selon l'une quelconque des revendications 9 à 12, **caractérisé en ce que** les valeurs de consigne comprennent la capacité calorifique spécifique du fluide travail ($c_p$) et/ou la masse volumique spécifique du fluide travail (p).

**14.** Procédé selon l'une quelconque des revendications 1 à 13, **caractérisé en ce que** la puissance de refroidissement (Pw) qui a été déterminée est rejetée par le dispositif de surveillance d'état (9) comme n'étant pas vraisemblable, lorsque les valeurs mesurées du fluide travail se situent à l'extérieur d'une plage de travail qui a été définie.

**15.** Dispositif de surveillance d'état (9) destiné à un système hydraulique d'une installation de transformation métallique (1) ; dans lequel le système hydraulique est accouplé à une pompe (2) qui peut être entraînée à des fins de mise à disposition d'un fluide de travail dans le système hydraulique et à un échangeur de chaleur (12) ou est muni de ladite pompe et dudit échangeur de chaleur, dont le côté primaire (13) peut être traversé par le fluide de travail et au côté secondaire (18) duquel peut être fourni un fluide de refroidissement qui est destiné à absorber une partie d'une énergie thermique du fluide de travail, **caractérisé en ce que** le dispositif de surveillance d'état (9) est réalisé à des fins de mise en œuvre d'un procédé selon l'une quelconque des revendications 1 à 14.

**16.** Dispositif de surveillance d'état (9) selon la revendication 15, **caractérisé en ce que** le dispositif de surveillance d'état comprend un dispositif de surveillance de la puissance (10, 11) ou est accouplé à un tel dispositif ; dans lequel le dispositif de surveillance de la puissance est réalisé à des fins d'affichage sur un dispositif d'affichage (11), de la puissance de refroidissement en vigueur (Pw) de l'échangeur de chaleur (12), qui a été déterminée par le dispositif de surveillance d'état.

FIG.1

## FIG.3

$$\Delta p \rightarrow Q$$

$$Pw = \rho \cdot Q \cdot c_p \cdot \Delta T$$

Ta

Te

Pw

10

11

$c_p$

$\varrho$

18E

18A

18

12

13

14

15

16

17

13A

13E

## FIG.2

S1 — Pw

S2 — Pp

S3 — Tu

S4

Mi

$\Delta p$
Te
Ta

U
I

Tu

S1

$c_{p},\,\rho$ — S1-1

B

$\triangle p \rightarrow Q$ — S1-2

A

Te, Ta — S1-3

$Pw = \rho \cdot Q \cdot c_{p} \cdot \Delta T$ — S1-4

Pw — S1-5

FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010136254 A1